# EUROPÄISCHE PATENTSCHRIFT

(11) **EP 3 236 033 B1**
(45) Veröffentlichungstag und Bekanntmachung des Hinweises auf die Patenterteilung: **15.08.2018**
(21) Anmeldenummer: 17157647.3
(22) Anmeldetag: 23.02.2017
(51) Int. Cl.: F01N 3/20

(54) **KOMBINATIONSVENTIL ZUM BEFÜLLEN UND ENTLÜFTEN EINES FLÜSSIGKEITSTANKS**
COMBINATION VALVE FOR FILLING AND VENTING OF A LIQUID RESERVOIR
SOUPAPE COMBINÉE POUR REMPLIR ET AÉRER UN RÉSERVOIR DE LIQUIDE

(30) Priorität: 21.04.2016 DE 102016107430
(43) Veröffentlichungstag der Anmeldung: 25.10.2017
(73) Patentinhaber: VERITAS AG, 63571 Gelnhausen (DE)
(72) Erfinder: GROß, Michael, 61203 Reichelsheim (DE)
(74) Vertreter: Patentship Patentanwaltsgesellschaft mbH

(56) Entgegenhaltungen:
- EP-A2- 0 999 082
- WO-A1-2011/001256
- DE-A1- 19 637 925
- DE-A1-102014 110 283
- JP-A- H07 279 788
- US-A1- 2002 104 570

## Beschreibung

Die vorliegende Erfindung betrifft ein Kombinationsventil zum Befüllen und Entlüften eines Flüssigkeitstanks. Insbesondere betrifft die vorliegende Erfindung ein Kombinationsventil mit einem Leitungsventil für die Leitung eines Fluids während eines Befüllens eines Flüssigkeitstanks und mit einem Entlüftungsventil zum Entlüften des Flüssigkeitstanks während des Befüllens des Flüssigkeitstanks.

In einem Kraftfahrzeug werden unterschiedliche Flüssigkeitstanks zum Speichern von unterschiedlichen Arten von Flüssigkeiten verwendet. Beispielsweise kommt in einem Kraftfahrzeug ein Flüssigkeitstank zum Speichern von wässriger Harnstofflösung zum Einsatz. Die wässrige Harnstofflösung wird in diesem Fall für eine selektive katalytische Reduktion (SCR) des Abgasgemisches eines Verbrennungsmotors verwendet. Während des Befüllens eines Flüssigkeitstanks, insbesondere Harnstofftanks, durch ein Leitungsventil mit Flüssigkeit, insbesondere Harnstofflösung, wird Gas, insbesondere Luft, aus dem Flüssigkeitstank verdrängt. Um das aus dem Flüssigkeitstank verdrängte Gas, insbesondere die verdrängte Luft, wirksam abzuleiten, wird ein Entlüftungsventil verwendet, wodurch ein Druckanstieg in dem Flüssigkeitstank während des Befüllens verhindert werden kann. Herkömmlich verwendete Leitungsventile oder Entlüftungsventile, wie z.B. Ventilklappen, können durch Eisbildung in einer mit dem Flüssigkeitstank verbundenen Fluidleitung oder durch ein Schwappen der Flüssigkeit beschädigt werden.

In der WO 2011/001256 A1 ist eine Tankanordnung zum Speichern eines flüssigen Reduktionsmittels in einem Tank offenbart, wobei die Tankanordnung ein Füllrohr und ein Entlüftungssystem umfasst.

Vor diesem Hintergrund stellt sich die Aufgabe ein Kombinationsventil mit einem Leitungsventil und einem Entlüftungsventil bereitzustellen, welches eine hohe Lebensdauer aufweist.

Diese Aufgabe wird durch den Gegenstand des unabhängigen Anspruchs gelöst. Vorteilhafte Ausführungsformen der Erfindung sind Gegenstand der abhängigen Ansprüche sowie der Figuren und der Beschreibung.

Gemäß einem ersten Aspekt der Erfindung wird die Aufgabe durch ein Kombinationsventil zum Befüllen und Entlüften eines Flüssigkeitstanks gelöst, mit einem Ventilgehäuse mit einem Leitungsventil für die Leitung eines Fluids, und einem Entlüftungsgehäuse mit einem Entlüftungsventil zum Entlüften des Flüssigkeitstanks während des Befüllens des Flüssigkeitstanks mittels des Leitungsventils, wobei das Leitungsventil und das Entlüftungsventil fluidtechnisch nebeneinander verlaufen und wobei das Ventilgehäuse und das Entlüftungsgehäuse starr miteinander verbunden sind.

Das erfindungsgemäße Kombinationsventil ermöglicht ein Leitungsventil für die Leitung eines Fluids während des Befüllens des Flüssigkeitstanks und ein Entlüftungsventil zum Entlüften des Flüssigkeitstanks während des Befüllens des Flüssigkeitstanks mittels des Leitungsventils wirksam in einem gemeinsamen Bauteil zu vereinen. Das Kombinationsventil kann somit wirksam und vorteilhaft mit einer Befüllleitung und einer Entlüftungsleitung eines Flüssigkeitstanks, insbesondere eines Flüssigkeitstanks zur Aufnahme einer Harnstofflösung, fluidtechnisch verbunden werden.

Das Kombinationsventil bietet eine funktionelle und kostengünstige Alternative zum Einbau von konventionellen Entlüftungsventilen oder Leitungsventilen in einem Kraftfahrzeug. In dem Kombinationsventil sind das Entlüftungsventil und das Leitungsventil in einem Bauteil vereint, wodurch die Einbaumaße des Kombinationsventils im Gegensatz zur Verwendung von separat verbauten Entlüftungsventilen, bzw. Leitungsventilen reduziert werden können. Dadurch kann Bauraum in engen Bauraumsituationen eingespart werden, wodurch die Montagekosten und der Montageaufwand reduziert und die Stabilität erhöht werden können.

Ferner kann durch die fluidtechnisch nebeneinander verlaufende Anordnung des Leitungsventils und des Entlüftungsventils und durch die starre Verbindung zwischen dem Ventilgehäuse und dem Entlüftungsgehäuse sichergestellt werden, dass das Leitungsventil und das Entlüftungsventil in einem festen Abstand zueinander in dem Kombinationsventil angeordnet sind. Dadurch wird sichergestellt, dass sich beim Betrieb des Kombinationsventils und den dabei auftretenden mechanischen Kräften das Leitungsventil und das Entlüftungsventil nicht gegeneinander verschoben werden können. Zudem kann das Kombinationsventil als eine Rahmendurchführung verwendet werden.

Gegenüber herkömmlichen Leitungs- oder Entlüftungsventilen, wie z.B. federgelagerten Spitback-Klappen, ist das erfindungsgemäße Kombinationsventil einfacher und kostengünstiger zu fertigen. Zudem weist das erfindungsgemäße Kombinationsventil einen größeren Widerstand gegen Eis auf, welches sich beispielsweise beim Befüllen oder Entlüften eines Harnstofftanks bilden kann, und wodurch die Wahrscheinlichkeit einer Beschädigung von funktionsrelevanten Teilen des Kombinationsventils durch Schwappen des Fluids, bzw. durch Eisschlag reduziert werden kann. Das erfindungsgemäße Kombinationsventil kann zudem in einem separaten platzsparenden Gehäuse durch eine Befüll- und Entlüftungsleitung mit dem Flüssigkeitstank verbunden werden oder direkt in einen Tankanschlussstutzen des Flüssigkeitstanks eingesetzt werden, um ein wirksames Befüllen und Entlüften des Flüssigkeitstanks zu gewährleisten.

In einer vorteilhaften Ausführungsform sind das Ventilgehäuse und das Entlüftungsgehäuse mittels zumindest eines Verbindungssteges miteinander verbunden.

Dadurch wird der Vorteil erreicht, dass durch den zumindest einen Verbindungssteg, welcher das Ventilgehäuse und das Entlüftungsgehäuse verbindet, sichergestellt wird, dass eine besonders stabile, starre Verbindung zwischen dem Ventilgehäuse und dem Entlüftungsgehäuse sichergestellt wird. Somit wird durch den zumindest einen Verbindungssteg sichergestellt, dass das Leitungsventil und das Entlüftungsventil in dem Kombinationsventil fluidtechnisch nebeneinander angeordnet sind, und dass das Ventilgehäuse und das Entlüftungsgehäuse bei auftretenden mechanischen Belastungen nicht gegeneinander verschoben werden. Insbesondere weist das Kombinationsventil vier Verbindungsstege auf, durch welche das Ventilgehäuse mit dem Entlüftungsgehäuse starr verbunden ist.

In einer vorteilhaften Ausführungsform weist das Kombinationsventil ferner ein Fixierungselement auf, welches das Ventilgehäuse und das Entlüftungsgehäuse zumindest teilweise, insbesondere clipartig, umgreift.

Dadurch wird der Vorteil erreicht, dass neben der starren Verbindung zwischen dem Ventilgehäuse und dem Entlüftungsgehäuse, welche insbesondere durch den zumindest einen Verbindungssteg sichergestellt wird, durch das Fixierungselement eine zusätzliche Fixierung des Ventilgehäuses an dem Entlüftungsgehäuse in dem Kombinationsventil erreicht wird, wodurch die Gesamtstabilität des Kombinationsventils verbessert werden kann.

In einer vorteilhaften Ausführungsform weisen das Ventilgehäuse und das Entlüftungsgehäuse jeweils eine zylindrische Form auf.

Dadurch wird der Vorteil erreicht, dass durch die zylindrische Form des Ventilgehäuses und des Entlüftungsgehäuses eine besonders vorteilhafte Ausbildung des Kombinationsventils mit dem Leitungsventil und mit dem Entlüftungsventil ermöglicht wird.

In einer vorteilhaften Ausführungsform bilden das Ventilgehäuse und das Entlüftungsgehäuse ein einstückiges Bauteil.

Dadurch wird der Vorteil erreicht, dass durch das einstückige Bauteil, welches das Ventilgehäuse und das Entlüftungsgehäuse umfasst, das Leitungsventil und das Entlüftungsventil gemeinsam in dem Kombinationsventil untergebracht werden können. Dadurch können die Einbaumaße des Kombinationsventils reduziert werden, die Fertigung des Kombinationsventils kann einfacher und kostengünstiger gestaltet werden, und der Montageaufwand und die Montagekosten können reduziert werden.

In einer vorteilhaften Ausführungsform begrenzt das Ventilgehäuse einen Fluidkanal, wobei der Fluidkanal einen Fluideinlass und einen Fluidauslass aufweist, und begrenzt das Entlüftungsgehäuse einen Gaskanal, wobei der Gaskanal einen Gaseinlass und einen Gasauslass aufweist, wobei der Fluidkanal einen Fluidkanaldurchmesser aufweist, wobei der Gaskanal einen Gaskanaldurchmesser aufweist, und wobei der Fluidkanaldurchmesser größer als der Gaskanaldurchmesser ist.

Dadurch wird der Vorteil erreicht, dass der im Vergleich zum Gaskanaldurchmesser des Gaskanals größere Fluidkanaldurchmessers des Fluidkanals ermöglicht, dass bei einer gleichen Strömungsgeschwindigkeit von Fluid in dem Fluidkanal und in dem Gaskanal, eine größere Menge an Fluid durch den Fluidkanal, als durch den Gaskanal geleitet werden kann. Dies ermöglicht insbesondere beim Befüllen eines Flüssigkeitstanks, insbesondere Harnstofftanks, ein vorteilhaftes und zügiges Befüllen des Flüssigkeitstanks mit Flüssigkeit, insbesondere mit Harnstofflösung.

In einer vorteilhaften Ausführungsform ist das Ventilgehäuse mit einem ersten Leitungsstutzen zum Aufstecken eines ersten Fluidleitungsabschnittes einer Fluidleitung, und mit einem zweiten Leitungsstutzen zum Aufstecken eines zweiten Fluidleitungsabschnittes der Fluidleitung, verbunden, und/oder ist das Entlüftungsgehäuse mit einem ersten Entlüftungsstutzen zum Aufstecken eines ersten Gasleitungsabschnittes einer Gasleitung, und mit einem zweiten Entlüftungsstutzen zum Aufstecken eines zweiten Gasleitungsabschnittes der Gasleitung, verbunden.

Dadurch wird der Vorteil erreicht, dass durch die beiden Leitungsstutzen das Ventilgehäuse vorteilhaft mit den jeweiligen Fluidleitungsabschnitten der Fluidleitung fluidtechnisch verbunden werden kann, und dass durch die beiden Entlüftungsstutzen das Entlüftungsgehäuse vorteilhaft mit den jeweiligen Gasleitungsabschnitten der Gasleitung fluidtechnisch verbunden werden kann.

In einer vorteilhaften Ausführungsform begrenzt das Ventilgehäuse einen Fluidkanal, welcher einen Fluideinlass und einen Fluidauslass aufweist, und wobei das Leitungsventil einen hülsenförmigen Formkörper aufweist, welcher in dem Fluidkanal angeordnet ist.

Dadurch wird der Vorteil erreicht, dass durch den in dem Fluidkanal angeordneten hülsenförmigen Formkörper des Leitungsventils eine besonders wirksame Leitung des Fluids in dem Fluidkanal ermöglicht, und somit ein wirksames Befüllen eines mit dem Kombinationsventil fluidtechnisch verbundenen Flüssigkeitstanks sichergestellt wird.

In einer vorteilhaften Ausführungsform weist der hülsenförmige Formkörper ein erstes Ende auf, das fluiddicht abgeschlossen ist, und ein dem ersten Ende abgewandtes zweites Ende auf, das durch einen umlaufenden Randabschnitt begrenzt ist, wobei das erste Ende fluideinlassseitig an einer Innenwandung des Fluidkanals anliegt, wobei das zweite Ende fluidauslassseitig angeordnet ist, und wobei der umlaufende Randabschnitt einen ersten Randbereich und einen zweiten Randbereich aufweist, wobei der erste Randbereich an der Innenwandung des Fluidkanals fluiddicht anliegt und wobei der zweite Randbereich an der Innenwandung anliegt, wobei der hülsenförmige Formkörper in Fluidflussrichtung zwischen dem ersten Ende und dem zweiten Ende einen konvexen Strömungsbereich aufweist, wobei der konvexe Strömungsbereich geformt ist, das Fluid in Fluidflussrichtung über eine Außenoberfläche des konvexen Strömungsbereichs zu dem zweiten Randbereich zu leiten, und wobei der zweite Randbereich durch das Fluid radial verformbar ist, um das Fluid zum Fluidauslass zu leiten.

Dadurch wird der Vorteil erreicht, dass durch den hülsenförmigen Formkörpers in dem Fluidkanal ein Leitungsventil für die Leitung eines Fluids, insbesondere eine Harnstofflösung, bereitgestellt wird, welches eine vorteilhafte Leitung des Fluids in Fluidflussrichtung ermöglicht. Der hülsenförmige Formkörper ist in Abhängigkeit von der Richtung und der Strömungsgeschwindigkeit des über die Außenoberfläche des hülsenförmigen Formkörpers geleiteten Fluids radial verformbar. Durch die konvexe Form des konvexen Strömungsbereichs kann in Fluidflussrichtung strömendes Fluid wirksam über die Außenoberfläche des konvexen Strömungsbereichs geleitet und an den umlaufenden Randabschnitt kanalisiert werden. Das Fluid wird zu einem zweiten Randbereich des umlaufenden Randabschnitts geleitet, wodurch der zweite Randbereich an dieser Stelle radial verformt wird und eine Öffnung zwischen dem umlaufenden Randabschnitt und dem Fluidkanal freigegeben wird, durch die das Fluid zum Fluidauslass des Leitungsventils geleitet werden kann.

In einer vorteilhaften Ausführungsform ist der zweite Randbereich in Fluidsperrrichtung durch rückströmbares Fluid an die Innenwandung des Fluidkanals anpressbar, um das Leitungsventil in Fluidsperrrichtung fluidtechnisch zu sperren.

Dadurch wird der Vorteil erreicht, dass das Leitungsventil ebenfalls ausgebildet ist, die Leitung von Fluid in dem Fluidkanal fluidtechnisch zu sperren, wenn das Fluid in dem Fluidkanal in der Fluidsperrrichtung zurück strömt. Somit ist das Leitungsventil insbesondere als ein Rückschlagventil ausgebildet, wodurch ein Zurückströmen von Fluid in dem Fluidkanal in der Fluidsperrrichtung verhindert wird.

In einer vorteilhaften Ausführungsform verjüngt der hülsenförmige Formkörper sich von dem zweiten Ende zu dem ersten Ende hin oder ist trichterförmig geformt.

Dadurch wird der Vorteil erreicht, dass durch den sich verjüngenden hülsenförmigen Formkörper, bzw. durch die trichterförmige Form des hülsenförmigen Formkörpers ein besonders wirksames Leiten des Fluids über die Außenoberfläche des hülsenförmigen Formkörpers ermöglicht wird. Dadurch kann das Fluid wirksam kanalisiert werden und gebündelt auf den umlaufenden Randabschnitt des hülsenförmigen Formkörpers geleitet werden, wodurch der zweite Randbereich wirksam radial verformt werden kann.

In einer vorteilhaften Ausführungsform begrenzt das Entlüftungsgehäuse einen Gaskanal, welcher einen Gaseinlass und einen Gasauslass aufweist, und weist das Entlüftungsventil einen elastischen Formkörper auf, welcher in dem Gaskanal angeordnet ist.

Dadurch wird der Vorteil erreicht, dass durch den in dem Gaskanal angeordneten elastischen Formkörper des Entlüftungsventils eine besonders wirksame Entlüftung eines mit dem Kombinationsventil fluidtechnisch verbundenen Flüssigkeitstanks ermöglicht wird.

In einer vorteilhaften Ausführungsform weist der elastische Formkörper einen Becherkörper auf, welcher einen Hohlraum aufweist, der durch einen umlaufenden Becherrand begrenzt ist, wobei der elastische Formkörper einen Sockel aufweist, welcher sich von dem Becherkörper erstreckt und in einen Sockelfuß übergeht, wobei der Sockelfuß fluidauslassseitig seitlich umlaufend mit einer Innenwandung des Gaskanals verbunden ist, wobei der umlaufende Becherrand zum Gaseinlass hin gerichtet ist, wobei zwischen dem Becherkörper und der Innenwandung ein Gasspalt vorgesehen ist, um gaseinlassseitig einströmendes Gas über eine Außenoberfläche des Becherkörpers zum Gasauslass hin zu leiten, und/oder wobei der Becherkörper durch gaseinlassseitig in den Hohlraum einströmende Flüssigkeit radial verformbar und gegen die Innenwandung anpressbar ist, um den Gaskanal flüssigkeitsdicht zu verschließen.

Dadurch wird der Vorteil erreicht, dass der elastische Formkörper in dem Gaskanal ein wirksames Abführen von aus dem Flüssigkeitstank verdrängtem Gas, insbesondere Luft, ermöglicht. Das Entlüftungsventil ist ausgebildet, den Gaskanal fluidtechnisch zu verschließen, wenn aus dem Flüssigkeitstank Flüssigkeit austritt und in das Entlüftungsventil strömt. Somit ermöglicht das Entlüftungsventil das selektive Leiten von Gas von dem Gaseinlass durch den Gaskanal zu dem Gasauslass, wohingegen das Leiten von Flüssigkeit in dem Gaskanal durch den elastischen Formkörper verhindert wird. Wenn Gas durch den Gaskanal strömt, kann das Gas durch den Gasspalt zwischen dem Becherkörper und der Innenwandung des Gaskanals von dem Gaseinlass durch den Gaskanal zu dem Gasauslass geleitet werden. Somit kann das Gas den Gaskanal passieren und aus dem Gasauslass wieder austreten. Umfasst das Fluid hingegen eine Flüssigkeit, insbesondere eine Harnstofflösung, welche mit einem bestimmten Druck durch den Gaseinlass in den Gaskanal des Entlüftungsventils eindringt, strömt die Flüssigkeit durch den umlaufenden Becherrand des Becherkörpers gaseinlassseitig in den Hohlraum des Becherkörpers. Da die eingeströmte Flüssigkeit aus dem Hohlraum aufgrund der becherförmigen Form des Becherkörpers nicht gasauslassseitig austreten kann, wird durch die Flüssigkeit ein Druck auf den Becherkörper ausgeübt. Durch den Druckanstieg wird der Becherkörper radial verformt, insbesondere radial aufgeweitet, wodurch der Becherkörper an die Innenwandung des Gaskanals angepresst wird, wodurch der Gasspalt und der Gaskanal flüssigkeitsdicht verschlossen werden. Somit ermöglicht das Entlüftungsventil das selektive Leiten von Gas, wohingegen das Entlüftungsventil beim Leiten von Flüssigkeit durch den Gaskanal fluidtechnisch gesperrt wird.

In einer vorteilhaften Ausführungsform verjüngt sich der Becherkörper von dem umlaufenden Becherrand zu einem dem Sockel zugewandten Ende des Becherkörpers hin.

Dadurch wird der Vorteil erreicht, dass durch die sich von dem umlaufenden Becherrand zu einem dem Sockel zugewandten Ende des Becherkörpers verjüngende Form des Becherkörpers beim Einströmen der Flüssigkeit in den Hohlraum des Becherkörpers sichergestellt wird, dass der umlaufende Becherrand besonders wirksam gegen die Innenwandung des Fluidkanals angepresst wird, um einen wirksamen fluidtechnischen Verschluss des Gaskanals sicherzustellen.

In einer vorteilhaften Ausführungsform ist an der Außenoberfläche des Becherkörpers zumindest ein Gasleitungskanal angeordnet, um gaseinlassseitig einströmendes Gas durch den Gasleitungskanal zum Gasauslass hin zu leiten, wobei sich der Gasleitungskanal insbesondere von dem umlaufenden Becherrand zu einem dem Sockel zugewandten Ende des Becherkörpers hin verjüngt.

Hierdurch wird beispielsweise der technische Vorteil erreicht, dass durch den zumindest einen Gasleitungskanal ein besonders strömungsoptimiertes Leiten von Gas an der Außenseite des Becherkörpers ermöglicht wird, wodurch eine besonders wirksame Entlüftung durch das Entlüftungsventil sichergestellt wird.

Ausführungsbeispiele der Erfindung sind in den Zeichnungen dargestellt und werden im Folgenden näher beschrieben.

Es zeigen:
- Fig. 1: eine Explosionsdarstellung eines Kombinationsventils mit einem Leitungsventil und einem Entlüftungsventil;
- Fig. 2: eine Schnittdarstellung eines Kombinationsventils mit einem Leitungsventil und einem Entlüftungsventil; und
- Fig. 3: eine Seitenansicht eines hülsenförmigen Formkörpers gemäß einer Ausführungsform und eines elastischen Formkörpers gemäß einer Ausführungsform.

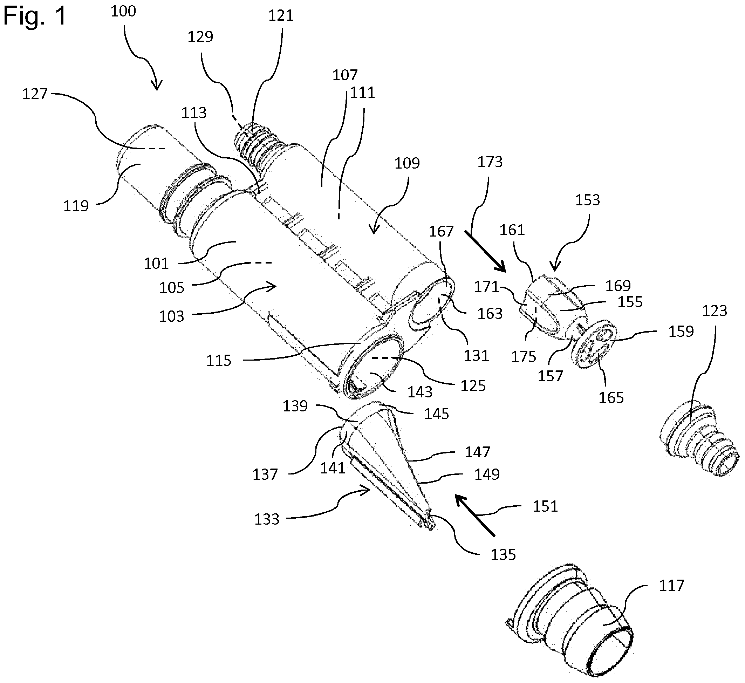

Die Figur 1 zeigt eine Seitenansicht eines Kombinationsventils mit einem Leitungsventil und mit einem Entlüftungsventil. Das Leitungsventil umfasst insbesondere ein Rückschlagventil, für das Leiten eines Fluids insbesondere für das Leiten einer Harnstofflösung in einem Kraftfahrzeug. Das Entlüftungsventil zum Entlüften eines Flüssigkeitstanks ist mit dem Flüssigkeitstank, z.B. einem Flüssigkeitstank für eine Harnstofflösung in einem Kraftfahrzeug, insbesondere durch eine Entlüftungsleitung fluidtechnisch verbunden.

In Figur 1 ist eine Seitenansicht eines Kombinationsventils ohne angeschlossene Leitungen in einer Explosionsdarstellung dargestellt. Das Kombinationsventil 100 weist ein Ventilgehäuse 101 mit einem Leitungsventil 103 für die Leitung eines Fluids auf. Das Ventilgehäuse 101 begrenzt einen Fluidkanal 105 des Leitungsventils 103. Das Kombinationsventil 100 weist ein Entlüftungsgehäuse 107 mit einem Entlüftungsventil 109 zum Entlüften eines Flüssigkeitstanks auf. Das Entlüftungsgehäuse 107 begrenzt einen Gaskanal 111 des Entlüftungsventils 109.

In dem Kombinationsventil 100 verlaufen das Leitungsventil 103 und das Entlüftungsventil 109 fluidtechnisch nebeneinander. Somit kann während des Befüllens des Flüssigkeitstanks ein Fluid, insbesondere eine Harnstoff-Lösung, durch den Fluidkanal 105 geleitet werden, und gleichzeitig der Flüssigkeitstank durch das Entlüftungsventil 109 entlüftet werden.

Ferner ist das Ventilgehäuse 101 mit dem Entlüftungsgehäuse 107 durch vier Verbindungsstege 113 starr verbunden. Das Kombinationsventil 100 weist ferner ein Fixierungselement 115 auf, welches das Ventilgehäuse 101 und das Entlüftungsgehäuse 107 zumindest teilweise, insbesondere clipartig, umgreift.

Somit bilden das Ventilgehäuse 101 und das Entlüftungsgehäuse 107 ein einstückiges Bauteil, und durch die starre Verbindung zwischen dem Ventilgehäuse 101 und dem Entlüftungsgehäuse 107 kann eine wirksame stabile Anordnung des Entlüftungsventils 109 gegenüber dem Leitungsventil 103 in dem Kombinationsventil 100 sichergestellt werden.

Das Ventilgehäuse 101 ist ferner mit einem ersten Leitungsstutzen 117 zum Aufstecken eines ersten Fluidleitungsabschnittes einer Fluidleitung, und einem zweiten Leitungsstutzen 119 zum Aufstecken eines zweiten Fluidleitungsabschnittes der Fluidleitung, verbunden. Das Entlüftungsgehäuse 107 ist ferner mit einem ersten Entlüftungsstutzen 121 zum Aufstecken eines ersten Gasleitungsabschnittes einer Gasleitung, und einem zweiten Entlüftungsstutzen 123 zum Aufstecken eines zweiten Gasleitungsabschnittes der Gasleitung, verbunden.

Der Fluidkanal 105 des Leitungsventils 103 weist einen Fluideinlass 125 und einen Fluidauslass 127 auf. Ein Fluid kann aus der Fluidleitung durch den ersten Leitungsstutzen 117 und durch den Fluideinlass 125 in den Fluidkanal 105 geleitet werden, und das eingeleitete Fluid kann aus dem Fluidkanal 105 durch den Fluidauslass 127 und durch den zweiten Leitungsstutzen 119 wieder in die Fluidleitung geleitet werden.

Der Gaskanal 111 des Entlüftungsventils 109 weist einen Gaseinlass 129 und einen Gasauslass 131 auf. Gas, insbesondere Luft, kann aus einer Gasleitung durch den ersten Entlüftungsstutzen 121 und durch den Gaseinlass 129 in den Gaskanal 111 geleitet werden, und das eingeleitete Gas kann aus dem Gaskanal 111 durch den Gasauslass 131 und durch den zweiten Entlüftungsstutzen 123 wieder in die Gasleitung geleitet werden.

Das Leitungsventil 103 weist ferner einen hülsenförmigen Formkörper 133 auf, welcher in dem Fluidkanal 105 angeordnet ist. Der hülsenförmige Formkörper 133 weist ein erstes Ende 135 auf, welches an einer dem Fluideinlass 125 zugewandten Seite angeordnet ist, und weist ein zweites Ende 137 auf, welches an einer dem Fluidauslass 127 zugewandten Seite angeordnet ist. Der hülsenförmige Formkörper 133 weist an dem zweiten Ende 137 einen umlaufenden Randabschnitt 139 auf, welcher an dem Fluidkanal 105 anliegt, um den Fluidkanal 105 des Leitungsventils 103 fluidtechnisch zu versperren.

Hierbei weist der umlaufende Randabschnitt 139 einen ersten Randbereich 141 auf, welcher an einer Innenwandung 143 des Fluidkanals 105 fluiddicht anliegt, und weist einen zweiten Randbereich 145 auf, welcher an der Innenwandung 143 des Fluidkanals 105 anliegt. Der hülsenförmige Formkörper 133 weist ferner einen konvexen Strömungsbereich 147 mit einer Außenoberfläche 149 auf, wobei Fluid in Fluidflussrichtung 151 über die Außenoberfläche 149 geleitet wird, um das Fluid in dem konvexen Strömungsbereich 147 zu kanalisieren.

Der konvexe Strömungsbereich 147 weist eine in Fig. 1 nicht dargestellte konvexe Vertiefung auf, welche sich von dem zweiten Ende 137 zu dem ersten Ende 135 verjüngt, bzw. trichterförmig geformt ist. Die konvexe Vertiefung des konvexen Strömungsbereichs 147 ermöglicht ein vorteilhaftes Leiten, bzw. eine vorteilhafte Kanalisierung der Fluidströmung zu dem zweiten Randbereich 145 des umlaufenden Randabschnitts 139 des hülsenförmigen Formkörpers 133. Durch die Kanalisierung der gebündelten Fluidströmung wird der zweite Randbereich 145 des umlaufenden Randabschnitts 139 an einer Stelle radial verformt. Der zweite Randbereich 145 liegt durch die radiale Verformung nicht mehr an der Innenwandung 143 des Fluidkanals 105 an, wodurch eine Öffnung zwischen dem umlaufenden Randabschnitt 139 und der Innenwandung 143 des Fluidkanals 105 entsteht, durch welche das Fluid in der Fluidflussrichtung 151 strömen kann. Der radial verformte zweite Randbereich 145 und die dadurch entstehende Öffnung sind in Figur 1 nicht dargestellt. Der konvexe Strömungsbereich 147 kann ferner einen Fluidleitungskanal umfassen, welcher z.B. als eine Rille gebildet ist, wobei der Fluidleitungskanal durch Rippen, Finnen und/oder Stege begrenzt ist, oder eine strömungsoptimierte Oberfläche, wie z.B. Schuppen aufweist, welche ausgebildet sind, Fluid über die Außenoberfläche 149 des konvexen Strömungsbereichs 147 vorteilhaft durch den Fluidkanal 105 zu leiten.

Das Entlüftungsventil 109 weist ferner einen elastischen Formkörper 153 auf, welcher in dem Gaskanal 111 angeordnet ist. Der elastische Formkörper 153 weist einen Becherkörper 155, sowie einen Sockel 157, welcher sich von dem Becherkörper 155 erstreckt und in einen Sockelfuß 159 übergeht, auf. Der Becherkörper 155 weist einen Becherrand 161 auf, welcher zum Gaseinlass 129 des Gaskanals 111 hin gerichtet ist. Der Sockelfuß 159 ist zum Gasauslass 131 des Gaskanals 111 hin gerichtet und seitlich umlaufend mit einer Innenwandung 163 des Gaskanals 111 verbunden. Der Sockelfuß 159 weist drei Öffnungen 165, auf, um fluideinlassseitig einströmendes Gas durch die Öffnungen 165 zum Gasauslass 131 hin zu leiten.

Wie in Figur 1 nur schematisch angedeutet, ist zwischen dem Becherkörper 155 und der Innenwandung 163 des Gaskanals 111 ein Gasspalt 167 freigebbar.

Ferner sind an einer Außenoberfläche 169 des Becherkörpers 155 drei Gasleitungskanäle 171 angeordnet, welcher ausgebildet ist, gaseinlassseitig einströmendes Gas in Gasströmungsrichtung 173 an der Außenoberfläche 169 des Becherkörpers 155 durch den Gaskanal 111 zu dem Gasauslass 131 zu leiten. Somit kann in der Gasströmungsrichtung 173 durch den Gaskanal 111 strömende Gas sowohl durch den Gasspalt 167 als auch durch die Gasleitungskanäle 171 an dem Becherkörper 155 vorbei zum Gasauslass 131 geleitet werden, um eine wirksame Entlüftung des Flüssigkeitstanks durch das Entlüftungsventil 109 sicherzustellen.

Der Becherkörper 155 weist einen Hohlraum 175 auf, welcher durch den umlaufenden Becherrand 161 begrenzt ist, wobei der Hohlraum 175 in der Fig. 1 gewählten Darstellung nicht einsehbar ist und nur schematisch dargestellt ist. Der Hohlraum 175 ist an einem dem Sockel 157 zugewandten Ende des Becherkörpers 155 verschlossen und ist an dem Becherrand 161 geöffnet.

Wenn Flüssigkeit in der Gasströmungsrichtung 173 durch den Gaskanal 111 fließt, dann strömt die Flüssigkeit durch den Becherrand 161 in den Hohlraum 175 des elastischen Formkörpers 153, wodurch sich der Becherkörper 155 radial nach außen verformt und gegen die Innenwandung 163 des Gaskanals 111 angepresst wird. Durch die in den Hohlraum 175 einströmende Flüssigkeit werden auch die Gasleitungskanäle 171 an der Außenoberfläche 169 des Becherkörpers 155 radial verformt und ebenfalls an die Innenwandung 163 des Gaskanals 111 angepresst. Somit pressen bei in den Hohlraum 175 einströmender Flüssigkeit der Becherkörper 155 und die Gasleitungskanäle 171 gegen die Innenwandung 163 des Gaskanals 111, wodurch der Gasspalt 167 und die Gasleitungskanäle 171 flüssigkeitsdicht verschlossen werden.

Somit kann durch das Entlüftungsventil 109 sichergestellt werden, dass in Gasströmungsrichtung 173 in dem Gaskanal 111 strömendes Gas durch den Gasspalt 167 und durch den Gaskanal 111 zum Gasauslass 131 strömen kann, um ein wirksames Entlüften des Flüssigkeitstanks zu ermöglichen. Wenn jedoch Flüssigkeit aus dem Flüssigkeitstank durch die Entlüftungsleitung in den Gaskanal 111 und zu dem elastischen Formkörper 153 vordringt, wird der Becherkörper 155 an die Innenwandung 163 des Gaskanals 111 angepresst, und dadurch der Gaskanal 111 flüssigkeitsdicht verschlossen, wodurch ein unbeabsichtigtes Leiten von Flüssigkeit durch das Entlüftungsventil 109 verhindert werden kann.

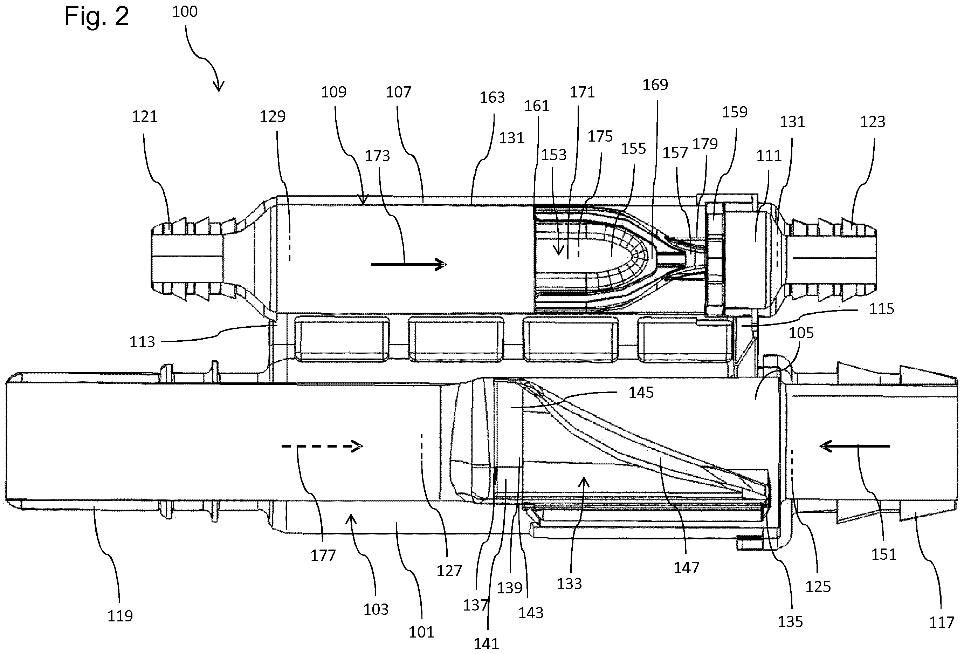

In Figur 2 ist eine Schnittdarstellung eines Kombinationsventils mit einem Leitungsventil und einem Entlüftungsventil dargestellt, wobei das Leitungsventil und das Entlüftungsventil jeweils in einer Verschlussstellung dargestellt sind.

Das in dem Kombinationsventil 100 angeordnete Leitungsventil 103 weist einen durch ein Ventilgehäuse 101 begrenzten Fluidkanal 105 mit einem Fluideinlass 125 und einem Fluidauslass 127 auf. Der Fluidkanal 105 weist einen ersten und zweiten Leitungsstutzen 117, 119 zum Anstecken von Fluidleitungen auf.

Das in dem Kombinationsventil 100 angeordnete Entlüftungsventil 109 weist einen durch ein Entlüftungsgehäuse 107 begrenzten Gaskanal 111 mit einem Gaseinlass 129 und einem Gasauslass 131 auf. Der Gaskanal 111 weist einen ersten und zweiten Entlüftungsstutzen 121, 123 zum Anstecken von Gasleitungen auf.

Das Ventilgehäuse 101 ist mit dem Entlüftungsgehäuse 107 durch vier Verbindungsstege 113 und einem Fixierungselement 115 starr verbunden, so dass das Ventilgehäuse 101 und das Entlüftungsgehäuse 107 ein einstückiges Bauteil bilden.

Das Leitungsventil 103 weist einen hülsenförmigen Formkörper 133 auf, welcher in dem Fluidkanal 105 angeordnet ist. Der hülsenförmige Formkörper 133 weist ein erstes Ende 135 und ein zweites Ende 137 auf, wobei das zweite Ende 137 einen umlaufenden Randabschnitt 139 aufweist, welcher gegen eine Innenwandung 143 des Fluidkanals 105 anpressbar ist, um den Fluidkanal 105 fluidtechnisch zu versperren. Der hülsenförmige Formkörper 133 weist ferner einen konvexen Strömungsbereich 147 mit einer konvexen Vertiefung auf, welcher ausgebildet ist, Fluid durch den Fluidkanal 105 zu leiten.

In der in Figur 2 dargestellten Verschlussstellung des Leitungsventils 103 wird durch einen Druckanstieg auf der stromabwärtigen Seite des hülsenförmigen Formkörpers 133 der umlaufende Randabschnitt 139, insbesondere der zweite Randbereich 145 des hülsenförmigen Formkörpers 133 gegen die Innenwandung 143 des Fluidkanals 105 gepresst. Dadurch wird sichergestellt, dass entgegen der Fluidflussrichtung 151, in der Fluidsperrrichtung 177 zurückfließendes Fluid, den hülsenförmigen Formkörper 133 nicht passieren kann.

Das Entlüftungsventil 109 weist einen elastischen Formkörper 153 auf, welcher in dem Gaskanal 111 angeordnet ist. Der elastische Formkörper 153 weist einen Becherkörper 155, einen Sockel 157 und einem Sockelfuß 159 auf, wobei der Sockel 157 und der Sockelfuß 159 durch Verbindungsleisten 179 miteinander verbunden sind. Die Öffnungen 165 des Sockelfußes 159 sind in Figur 2 nicht dargestellt. Der Sockelfuß 159 ist seitlich umlaufend mit einer Innenwandung 163 des Gaskanals 111 verbunden.

Der Becherkörper 155 weist gaseinlassseitig einen Becherrand 161 auf, durch welchen ein Hohlraum 175 des Becherkörpers 155 begrenzt ist. Ein zwischen dem Becherkörper 155 und der Innenwandung 163 des Gaskanals 111 vorgesehener Gasspalt 167 ist in Figur 2 nicht dargestellt, da der Gasspalt 167 verschlossen ist.

Wie in der Figur 2 dargestellt ist, kann jedoch statt Gas Flüssigkeit aus dem in Figur 2 nicht dargestellten Flüssigkeitstank entweichen und durch eine Entlüftungsleitung in das Entlüftungsventil 109 dringen. Hierbei strömt die Flüssigkeit durch den Gaseinlass 129 in der Gasströmungsrichtung 173 in den Gaskanal 111 des Entlüftungsventils 109 und strömt in den gasauslassseitig verschlossen Hohlraum 175 des Becherkörpers 155. Ab einem bestimmten Druckschwellenwert oder ab einer bestimmten Durchflussrate der in den Hohlraum 175 strömenden Flüssigkeit wird der Becherkörper 155 derart radial verformt, dass der Becherkörper 155 an die Innenwandung 163 des Gaskanals 111 angepresst wird.

Dadurch wird der Gasspalt 167 zwischen dem Becherkörper 155 und der Innenwandung 163 des Gaskanals 111 gasdicht verschlossen, wodurch die Flüssigkeit den elastischen Formkörper 153 nicht passieren kann.

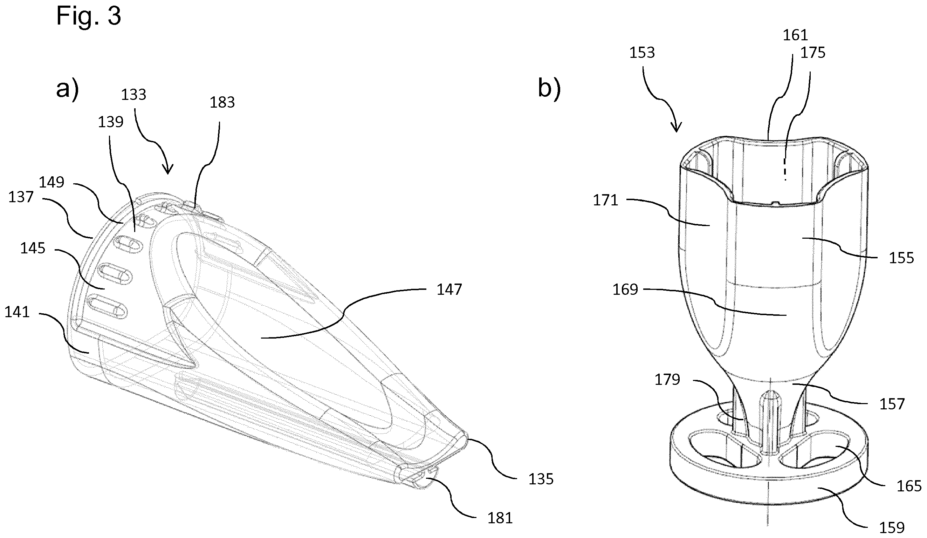

In Figur 3a ist eine Seitenansicht eines hülsenförmigen Formkörpers eines Leitungsventils gemäß einer Ausführungsform dargestellt.

Der hülsenförmige Formkörper 133 weist eine Längsfeder 181 auf, um den hülsenförmigen Formkörper 133 an einem Fluidkanal 105 eines Leitungsventils 103 zu befestigen. Der hülsenförmige Formkörper 133 weist ferner einen konvexen Strömungsbereich 147 mit einer konvexen Vertiefung auf, welcher ausgebildet ist, Fluid in der Fluidflussrichtung 151 in dem Fluidkanal 105 zu kanalisieren.

Der hülsenförmige Formkörper 133 weist ein erstes Ende 135 auf und weist ein zweites Ende 137 auf, wobei an dem zweiten Ende 137 ein umlaufender Randabschnitt 139 angeordnet ist, welcher gegen eine Innenwandung 143 des Fluidkanals 105 anpressbar ist, um den Fluidkanal 105 in der Fluidsperrrichtung 177 des Leitungsventils 103 zu versperren.

Der umlaufende Randabschnitt 139 weist einen ersten Randbereich 141 und einen zweiten Randbereich 145 auf, wobei der erste Randbereich 141 an der Innenwandung 143 des Fluidkanals 105 fluiddicht anliegt und wobei der zweite Randbereich 145 an der Innenwandung 143 anliegt. Hierbei ist der zweite Randbereich 145 durch das Fluid radial verformbar, um das Fluid zum Fluidauslass 127 zu leiten.

Da die Flüssigkeit eine Harnstofflösung umfassen kann, ist es möglich, dass der zweite Randbereich 145 an der Innenwandung 143 des Fluidkanals 105 festfriert, wodurch eine radiale Verformung des zweiten Randbereichs 145 verhindert wird und damit das Leiten von Flüssigkeit durch das Leitungsventils 103 gestoppt wird. Um eine Blockade des Leitungsventils 103 zu vermeiden ist an einer Außenoberfläche des zweiten Randbereichs 145 eine Anzahl von Rippen 183 angeordnet, welche an der Innenwandung 143 des Fluidkanals 105 anliegen. Somit liegt der zweite Randbereich 145 nicht vollständig sondern nur mit den Rippen 183 an der Innenwandung 143 des Fluidkanals 105 an, wodurch die Größe der Anlagefläche zwischen den Rippen 183 und der Innenwandung 143 reduziert werden kann. Hierdurch kann ein Festfrieren des zweiten Randbereichs 145 an der Innenwandung 143 des Fluidkanals 105 verhindert werden.

In Figur 3b ist eine Seitenansicht eines elastischen Formkörpers eines Entlüftungsventils gemäß einer Ausführungsform dargestellt.

Der elastische Formkörper 153 weist einen Becherkörper 155 auf, welcher durch einen Sockel 157 mit einem Sockelfuß 159 verbunden ist. Der Becherkörper 155 weist einen umlaufenden Becherrand 161 auf, welcher einen Hohlraum 175 begrenzt. Der Sockel 157 weist Verbindungsleisten 179 zur Stabilisierung des Sockels 157 auf. Der Sockelfuß 159 weist Öffnungen 165 auf.

Zwischen dem Becherkörper 155 und einer Innenwandung 163 des Gaskanals 111 wird ein in Figur 3b nicht dargestellter Gasspalt 167 freigegeben, um Gas durch den Gaskanal 111 zu leiten. Um eine vorteilhafte Strömungsführung des Gases zu ermöglichen, weist der Becherkörper 155 an einer Außenoberfläche 169 zumindest einen Gasleitungskanal 171 auf, durch welchen durch den Gaskanal 111 strömendes Gas vorteilhaft an dem elastischen Formkörper 153 vorbei geführt werden kann. Durch das Anbringen des Gasleitungskanals 171 können die gasführenden Eigenschaften des elastischen Formkörpers 153 vorteilhaft verbessert werden.

Der Becherrand 161 des Becherkörpers 155 begrenzt einen Hohlraum 175, welcher gasauslassseitig verschlossen ist. Flüssigkeit kann in den Hohlraum 175 einströmen, jedoch kann die einströmende Flüssigkeit nicht aus dem Hohlraum 175 entweichen und übt stattdessen einen Druck auf den Becherkörper 155 aus. Hierbei wird der Becherkörper 155 und auch der Gasleitungskanal 171 radial verformt und gegen die Innenwandung 163 des Gaskanals 111 angepresst. Dadurch wird sowohl der in Figur 3b nicht dargestellte Gasspalt 167 als auch der Gasleitungskanal 171 flüssigkeitsdicht verschlossen. Durch das Anbringen des Gasleitungskanals 171 an dem elastischen Formkörper 153 wird eine verbesserte Strömungsführung von Gas an der Außenoberfläche 169 des Becherkörpers 155 ermöglicht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kombinationsventil
- 101: Ventilgehäuse
- 103: Leitungsventil
- 105: Fluidkanal
- 107: Entlüftungsgehäuse
- 109: Entlüftungsventil
- 111: Gaskanal
- 113: Verbindungssteg
- 115: Fixierungselement
- 117: Erster Leitungsstutzen
- 119: Zweiter Leitungsstutzen
- 121: Erster Entlüftungsstutzen
- 123: Zweiter Entlüftungsstutzen
- 125: Fluideinlass
- 127: Fluidauslass
- 129: Gaseinlass
- 131: Gasauslass
- 133: Hülsenförmiger Formkörper
- 135: Erstes Ende des hülsenförmigen Formkörpers
- 137: Zweites Ende des hülsenförmigen Formkörpers
- 139: Umlaufender Randabschnitt
- 141: Erster Randbereich
- 143: Innenwandung des Fluidkanals
- 145: Zweiter Randbereich
- 147: Konvexer Strömungsbereich
- 149: Außenoberfläche des konvexen Strömungsbereichs
- 151: Fluidflussrichtung
- 153: Elastischer Formkörper
- 155: Becherkörper
- 157: Sockel
- 159: Sockelfuß
- 161: Becherrand
- 163: Innenwandung des Gaskanals
- 165: Öffnungen
- 167: Gasspalt
- 169: Außenoberfläche des Becherkörpers
- 171: Gasleitungskanal
- 173: Gasströmungsrichtung
- 175: Hohlraum
- 177: Fluidsperrrichtung
- 179: Verbindungsleiste
- 181: Längsfeder
- 183: Rippen

## Patentansprüche

1. Kombinationsventil (100) zum Befüllen und Entlüften eines Flüssigkeitstanks, mit:
einem Ventilgehäuse (101) mit einem Leitungsventil (103) für die Leitung eines Fluids; und
einem Entlüftungsgehäuse (107) mit einem Entlüftungsventil (109) zum Entlüften des Flüssigkeitstanks während des Befüllens des Flüssigkeitstanks mittels des Leitungsventils (103);
wobei das Leitungsventil (103) und das Entlüftungsventil (109) fluidtechnisch nebeneinander verlaufen, wobei das Ventilgehäuse (101) und das Entlüftungsgehäuse (107) starr miteinander verbunden sind,
**dadurch gekennzeichnet, dass**
das Ventilgehäuse (101) einen Fluidkanal (105) begrenzt, welcher einen Fluideinlass (125) und einen Fluidauslass (127) aufweist, wobei das Leitungsventil (103) einen hülsenförmigen Formkörper (133) aufweist, welcher in dem Fluidkanal (105) angeordnet ist, und das Entlüftungsgehäuse (107) einen Gaskanal (111) begrenzt, welcher einen Gaseinlass (129) und einen Gasauslass (131) aufweist, wobei das Entlüftungsventil (109) einen elastischen Formkörper (153) aufweist, welcher in dem Gaskanal (111) angeordnet ist.

2. Kombinationsventil (100) nach Anspruch 1, wobei das Ventilgehäuse (101) und das Entlüftungsgehäuse (107) mittels zumindest eines Verbindungssteges (113) miteinander verbunden sind.

3. Kombinationsventil (100) nach Anspruch 1 oder 2, wobei das Kombinationsventil (100) ferner ein Fixierungselement (115) aufweist, welches das Ventilgehäuse (101) und das Entlüftungsgehäuse (107) zumindest teilweise, insbesondere clipartig, umgreift.

4. Kombinationsventil (100) nach einem der vorangehenden Ansprüche, wobei das Ventilgehäuse (101) und das Entlüftungsgehäuse (107) jeweils eine zylindrische Form aufweisen.

5. Kombinationsventil (100) nach einem der vorangehenden Ansprüche, wobei das Ventilgehäuse (101) und das Entlüftungsgehäuse (107) ein einstückiges Bauteil bilden.

6. Kombinationsventil (100) nach einem der vorangehenden Ansprüche, wobei das Ventilgehäuse (101) einen Fluidkanal (105) begrenzt, wobei der Fluidkanal (105) einen Fluideinlass (125) und einen Fluidauslass (127) aufweist, und wobei das Entlüftungsgehäuse (107) einen Gaskanal (111) begrenzt, wobei der Gaskanal (111) einen Gaseinlass (129) und einen Gasauslass (131) aufweist, wobei der Fluidkanal (105) einen Fluidkanaldurchmesser aufweist, wobei der Gaskanal (111) einen Gaskanaldurchmesser aufweist, und wobei der Fluidkanaldurchmesser größer als der Gaskanaldurchmesser ist.

7. Kombinationsventil (100) nach einem der vorangehenden Ansprüche, wobei das Ventilgehäuse (101) mit einem ersten Leitungsstutzen (117) zum Aufstecken eines ersten Fluidleitungsabschnittes einer Fluidleitung, und mit einem zweiten Leitungsstutzen (119) zum Aufstecken eines zweiten Fluidleitungsabschnittes der Fluidleitung, verbunden ist, oder wobei das Entlüftungsgehäuse (107) mit einem ersten Entlüftungsstutzen (121) zum Aufstecken eines ersten Gasleitungsabschnittes einer Gasleitung, und mit einem zweiten Entlüftungsstutzen (123) zum Aufstecken eines zweiten Gasleitungsabschnittes der Gasleitung, verbunden ist.

8. Kombinationsventil (100) nach einem der vorangehenden Ansprüche, wobei der hülsenförmige Formkörper (133) ein erstes Ende (135), das fluiddicht abgeschlossen ist, und ein dem ersten Ende (135) abgewandtes zweites Ende (137), das durch einen umlaufenden Randabschnitt (139) begrenzt ist, aufweist,
wobei das erste Ende (135) fluideinlassseitig an einer Innenwandung (143) des Fluidkanals (105) anliegt, wobei das zweite Ende (137) fluidauslassseitig angeordnet ist, und wobei der umlaufende Randabschnitt (139) einen ersten Randbereich (141) und einen zweiten Randbereich (145) aufweist, wobei der erste Randbereich (141) an der Innenwandung (143) des Fluidkanals (105) fluiddicht anliegt und wobei der zweite Randbereich (145) an der Innenwandung (143) anliegt,
wobei der hülsenförmige Formkörper (133) in Fluidflussrichtung (151) zwischen dem ersten Ende (135) und dem zweiten Ende (137) einen konvexen Strömungsbereich (147) aufweist, wobei der konvexe Strömungsbereich (147) geformt ist, das Fluid in Fluidflussrichtung (151) über eine Außenoberfläche (149) des konvexen Strömungsbereichs (147) zu dem zweiten Randbereich (145) zu leiten, und wobei der zweite Randbereich (145) durch das Fluid radial verformbar ist, um das Fluid zum Fluidauslass (127) zu leiten.

9. Kombinationsventil (100) nach Anspruch 8, wobei der zweite Randbereich (145) in Fluidsperrrichtung (177) durch rückströmbares Fluid an die Innenwandung (143) des Fluidkanals (105) anpressbar ist, um das Leitungsventil (103) in Fluidsperrrichtung (177) fluidtechnisch zu sperren.

10. Kombinationsventil (100) nach Anspruch 8 oder 9, wobei der hülsenförmige Formkörper (133) sich von dem zweiten Ende (137) zu dem ersten Ende (135) hin verjüngt oder trichterförmig geformt ist.

11. Kombinationsventil (100) nach einem der vorangehenden Ansprüche, wobei der elastische Formkörper (153) einen Becherkörper (155) aufweist, welcher einen Hohlraum (175) aufweist, der durch einen umlaufenden Becherrand (161) begrenzt ist,
wobei der elastische Formkörper (153) einen Sockel (157) aufweist, welcher sich von dem Becherkörper (155) erstreckt und in einen Sockelfuß (159) übergeht, wobei der Sockelfuß (159) fluidauslassseitig seitlich umlaufend mit einer Innenwandung (163) des Gaskanals (111) verbunden ist, wobei der umlaufende Becherrand (161) zum Gaseinlass (129) hin gerichtet ist,
wobei zwischen dem Becherkörper (155) und der Innenwandung (163) ein Gasspalt (167) vorgesehen ist, um gaseinlassseitig einströmendes Gas über eine Außenoberfläche (169) des Becherkörpers (155) zum Gasauslass (131) hin zu leiten,
oder wobei der Becherkörper (155) durch gaseinlassseitig in den Hohlraum (175) einströmende Flüssigkeit radial verformbar und gegen die Innenwandung (163) anpressbar ist, um den Gaskanal (111)flüssigkeitsdicht zu verschließen.

12. Kombinationsventil (100) nach Anspruch 11, wobei sich der Becherkörper (155) von dem umlaufenden Becherrand (161) zu einem dem Sockel (157) zugewandten Ende des Becherkörpers (155) hin verjüngt.

13. Kombinationsventil (100) nach Anspruch 11 oder 12, wobei an der Außenoberfläche (169) des Becherkörpers (155) zumindest ein Gasleitungskanal (171) angeordnet ist, um gaseinlassseitig einströmendes Gas durch den Gasleitungskanal (171) zum Gasauslass (131) hin zu leiten, wobei sich der Gasleitungskanal (171) insbesondere von dem umlaufenden Becherrand (161) zu einem dem Sockel (157) zugewandten Ende des Becherkörpers (155) hin verjüngt.

## Claims

1. A combination valve (100) for filling and venting of a liquid reservoir, with:
a valve housing (101) having a line valve (103) for conducting a fluid; and
a venting housing (107) with a venting valve (109) for venting the liquid reservoir during the filling of the liquid reservoir by means of the line valve (103);
wherein the line valve (103) and the venting valve (109) extend fluidically next to one another, wherein the valve housing (101) and the venting housing (107) are rigidly connected to one another,
**characterized in that**
the valve housing (101) delimits a fluid channel (105) which comprises a fluid inlet (125) and a fluid outlet (127), wherein the line valve (103) comprises a sleeve-like molded body (133) which is arranged in the fluid channel (105), and
the venting housing (107) delimits a gas channel (111)which comprises a gas inlet (129) and a gas outlet (131), wherein the venting valve (109) comprises a resilient molded body (153) which is arranged in the gas channel (111).

2. The combination valve (100) according to Claim 1, wherein the valve housing (101) and the venting housing (107) are connected to one another by means of at least one connection web (113).

3. The combination valve (100) according to Claim 1 or 2, wherein the combination valve (100) moreover comprises a fastening element (115) which encloses the valve housing (101) and the venting housing (107) at least partially, in particular in the manner of a clip.

4. The combination valve (100) according to any one of the preceding claims, wherein the valve housing (101) and the venting housing (107) each have a cylindrical shape.

5. The combination valve (100) according to any one of the preceding claims, wherein the valve housing (101) and the venting housing (107) form a one-piece component.

6. The combination valve (100) according to any one of the preceding claims, wherein the valve housing (101) delimits a fluid channel (105), wherein the fluid channel (105) comprises a fluid inlet (125) and a fluid outlet (127), and wherein the venting housing (107) delimits a gas channel (111), wherein the gas channel (111) comprises a gas inlet (129) and a gas outlet (131), wherein the fluid channel (105) has a fluid channel diameter, wherein the gas channel (111) has a gas channel diameter, and wherein the fluid channel diameter is greater than the gas channel diameter.

7. The combination valve (100) according to any one of the preceding claims, wherein the valve housing (101) is connected to a first line connecting piece (117) for the fitting-on of a first fluid line section of a fluid line, and to a second line connecting piece (119) for the fitting-on of a second fluid line section of the fluid line, or wherein the venting housing (107) is connected to a first venting connecting piece (121) for the fitting-on of a first gas line section of a gas line, and to a second venting connecting piece (123) for the fitting-on of a second gas line section of the gas line.

8. The combination valve (100) according to any one of the preceding claims, wherein the sleeve-like molded body (133) has a first end (135) which is closed in a fluid-tight manner and a second end (137) facing away from the first end (135) and which is delimited by a circumferential edge section (139),
wherein the first end (135) is abuts on the fluid inlet side against an inner wall (143) of the fluid channel (105), wherein the second end (137) is arranged on the fluid outlet side, and wherein the circumferential edge section (139) has a first edge area (141) and a second edge area (145), wherein the first edge area (141) is abuts in a fluid-tight manner against the inner wall (143) of the fluid channel (105), and wherein the second edge area (145) abuts against the inner wall (143), wherein the sleeve-like molded body (133) has a convex flow area (147) in the fluid flow direction (151) between the first end (135) and the second end (137), wherein the convex flow area (147) is formed so as to conduct the fluid in the fluid flow direction (151) via an outer surface (149) of the convex flow area (147) to the second edge area (145), and wherein the second edge area (145) can be deformed radially by the fluid in order to conduct the fluid to the fluid outlet (127).

9. The combination valve (100) according to Claim 8, wherein the second edge area (145) can be pressed in the fluid blocking direction (177) by fluid capable of flowing backward against the inner wall (143) of the fluid channel (105), in order to fluidically block the line valve (103) in the fluid blocking direction (177).

10. The combination valve (100) according to Claim 8 or 9, wherein the sleeve-like molded body (133) tapers from the second end (137) to the first end (135) or is formed in the shape of a funnel.

11. The combination valve (100) according to any one of the preceding claims, wherein the resilient molded body (153) comprises a cup body (155) which has a hollow space (175) delimited by a circumferential cup edge (161),
wherein the resilient molded body (153) has a base (157) which extends from the cup body (155) and transitions into a base foot (159), wherein the base foot (159) is connected on the fluid outlet side laterally circumferentially to an inner wall (163) of the gas channel (111), wherein the circumferential cup wall (161) is directed towards the gas inlet (129),
wherein, between the cup body (155) and the inner wall (163), a gas slit (167) is provided, in order to conduct gas flowing in on the gas inlet side via an outer surface (169) of the cup body (155) to the gas outlet (131),
or wherein the cup body (155) can be deformed radially by liquid flowing in on the gas inlet side into the hollow space (175) and is capable of being pressed against the inner wall (163) in order to close the gas channel (111) in a fluid-tight manner.

12. The combination valve (100) according to Claim 11, wherein the cup body (155) tapers from the circumferential cup edge (161) to an end of the cup body (155) which faces the base (157).

13. The combination valve (100) according to Claim 11 or 12, wherein at least one gas line channel (171) is arranged on the outer surface (169) of the cup body (155), in order to conduct gas flowing in on the gas inlet side through the gas line channel (171) towards the gas outlet (131), wherein the gas line channel (171) tapers in particular from the circumferential cup edge (161) to an end of the cup body (155) which faces the base (157).

## Revendications

1. Soupape combinée (100) pour remplir et aérer un réservoir de liquide, avec :
un boîtier de soupape (101) avec une soupape de conduite (103) pour la conduite d'un fluide ; et
un boîtier d'aération (107) avec une soupape d'aération (109) pour aérer le réservoir de liquide pendant le remplissage du réservoir de liquide au moyen de la soupape de conduite (103) ;
dans laquelle la soupape de conduite (103) et la soupape d'aération (109) s'étendent fluidiquement l'une à côté de l'autre, dans laquelle le boîtier de soupape (101) et le boîtier d'aération (107) sont reliés rigidement l'un à l'autre,
**caractérisée en ce que**
le boîtier de soupape (101) délimite un canal de fluide (105), lequel présente une entrée de fluide (125) et une sortie de fluide (127), dans laquelle la soupape de conduite (103) présente un corps moulé en forme de douille (133), lequel est agencé dans le canal de fluide (105), et le boîtier d'aération (107) délimite un canal de gaz (111), lequel présente une entrée de gaz (129) et une sortie de gaz (131), dans laquelle la soupape d'aération (109) présente un corps moulé élastique (153), lequel est agencé dans le canal de gaz (111).

2. Soupape combinée (100) selon la revendication 1, dans laquelle le boîtier de soupape (101) et le boîtier d'aération (107) sont reliés l'un à l'autre au moyen d'au moins une entretoise de liaison (113).

3. Soupape combinée (100) selon la revendication 1 ou 2, dans laquelle la soupape combinée (100) présente en outre un élément de fixation (115), lequel entoure le boîtier de soupape (101) et le boîtier d'aération (107) au moins en partie, en particulier à la manière d'un clip.

4. Soupape combinée (100) selon l'une quelconque des revendications précédentes, dans laquelle le boîtier de soupape (101) et le boîtier d'aération (107) présentent respectivement une forme cylindrique.

5. Soupape combinée (100) selon l'une quelconque des revendications précédentes, dans laquelle le boîtier de soupape (101) et le boîtier d'aération (107) forment un élément d'un seul tenant.

6. Soupape combinée (100) selon l'une quelconque des revendications précédentes, dans laquelle le boîtier de soupape (101) délimite un canal de fluide (105), dans laquelle le canal de fluide (105) présente une entrée de fluide (125) et une sortie de fluide (127), et dans laquelle le boîtier d'aération (107) délimite un canal de gaz (111), dans laquelle le canal de gaz (111) présente une entrée de gaz (129) et une sortie de gaz (131), dans laquelle le canal de fluide (105) présente un diamètre de canal de fluide, dans laquelle le canal de gaz (111) présente un diamètre de canal de gaz, et dans laquelle le diamètre de canal de fluide est supérieur au diamètre de canal de gaz.

7. Soupape combinée (100) selon l'une quelconque des revendications précédentes, dans laquelle le boîtier de soupape (101) est relié à un premier embout de conduite (117) pour enficher une première section de conduite de fluide d'une conduite de fluide, et à un deuxième embout de conduite (119) pour enficher une deuxième section de conduite de fluide de la conduite de fluide, ou dans laquelle le boîtier d'aération (107) est relié à un premier embout d'aération (121) pour enficher une première section de conduite de gaz d'une conduite de gaz, et à un deuxième embout d'aération (123) pour enficher une deuxième section de conduite de gaz de la conduite de gaz.

8. Soupape combinée (100) selon l'une quelconque des revendications précédentes, dans laquelle le corps moulé en forme de douille (133) présente une première extrémité (135), qui est fermée de manière étanche aux fluides, et une deuxième extrémité (137) opposée à la première extrémité (135), qui est délimitée par une section de bord périphérique (139), dans laquelle la première extrémité (135) s'appuie côté entrée de fluide contre une paroi intérieure (143) du canal de fluide (105), dans laquelle la deuxième extrémité (137) est agencée côté sortie de fluide, et dans laquelle la section de bord périphérique (139) présente une première zone de bord (141) et une deuxième zone de bord (145), dans laquelle la première zone de bord (141) s'appuie de manière étanche aux fluides contre la paroi intérieure (143) du canal de fluide (105) et dans lequel la deuxième zone de bord (145) s'appuie contre la paroi intérieure (143),
dans laquelle le corps moulé en forme de douille (133) présente dans la direction de flux de fluide (151) entre la première extrémité (135) et la deuxième extrémité (137) une zone d'écoulement convexe (147), dans laquelle la zone d'écoulement convexe (147) est formée pour conduire le fluide dans la direction de flux de fluide (151) par le biais d'une surface extérieure (149) de la zone d'écoulement convexe (147) vers la deuxième zone de bord (145), et dans laquelle la deuxième zone de bord (145) est déformable radialement par le fluide pour conduire le fluide vers la sortie de fluide (127).

9. Soupape combinée (100) selon la revendication 8, dans laquelle la deuxième zone de bord (145) peut être pressée dans le sens de blocage de fluide (177) par un fluide pouvant refluer contre la paroi intérieure (143) du canal de fluide (105) pour bloquer fluidiquement la soupape de conduite (103) dans le sens de blocage de fluide (177).

10. Soupape combinée (100) selon la revendication 8 ou 9, dans laquelle le corps moulé en forme de douille (133) se rétrécit de la deuxième extrémité (137) à la première extrémité (135) ou est formé en forme d'entonnoir.

11. Soupape combinée (100) selon l'une quelconque des revendications précédentes, dans laquelle le corps moulé élastique (153) présente un corps de gobelet (155), lequel présente une cavité (175), qui est délimitée par un bord de gobelet périphérique (161),
dans laquelle le corps moulé élastique (153) présente un socle (157), lequel s'étend depuis le corps de gobelet (155) et se transforme en un pied de socle (159), dans laquelle le pied de socle (159) est relié côté sortie de fluide de manière latéralement périphérique à une paroi intérieure (163) du canal de gaz (111), dans laquelle le bord de gobelet préiphérique (161)est dirigé vers l'entrée de gaz (129),
dans laquelle entre le corps de gobelet (155) et la paroi intérieure (163), une fente de gaz (167) est prévue, pour conduire du gaz entrant côté entrée de gaz par le biais d'une surface de sortie (169) du corps de gobelet (155) vers la sortie de gaz (131),
ou dans laquelle le corps de gobelet (155) est radialement déformable par un liquide affluant côté entrée de gaz dans la cavité (175) et peut être pressé contre la paroi intérieure (163) pour fermer le canal de gaz (111) de manière étanche au liquide.

12. Soupape combinée (100) selon la revendication 11, dans laquelle le corps de gobelet (155) se rétrécit du bord de gobelet périphérique (161) vers une extrémité du corps de gobelet (155) tournée vers le socle (157).

13. Soupape combinée (100) selon la revendication 11 ou 12, dans laquelle au moins un canal de conduite de gaz (171) est agencé au niveau de la surface extérieure (169) du corps de gobelet (155) pour conduire du gaz affluant côté entrée de gaz par le canal de conduite de gaz (171) vers la sortie de gaz (131), dans laquelle le canal de conduite de gaz (171) se rétrécit en particulier du bord de gobelet périphérique (161) vers une extrémité du corps de gobelet (155) tourné vers le socle (157).
